(19) Europäisches Patentamt
European Patent Office
Office européen des brevets

(11) **EP 3 974 090 A1**

(12) **EUROPEAN PATENT APPLICATION**

(43) Date of publication:
**30.03.2022 Bulletin 2022/13**

(21) Application number: **20198279.0**

(22) Date of filing: **25.09.2020**

(51) International Patent Classification (IPC):
***B23H 7/10*** *(2006.01)*

(52) Cooperative Patent Classification (CPC):
**B23H 7/107**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Agie Charmilles SA
6616 Losone (CH)**

(72) Inventors:
• **Mondada, Nicola
6616 Losone (CH)**
• **Stacchi, Cesare
6670 Avegno (CH)**

(74) Representative: **Fenner, Seraina
Georg Fischer AG
Amsler-Laffon-Strasse 9
8201 Schaffhausen (CH)**

(54) **CURRENT FEEDER UNIT FOR WIRE ELECTRICAL DISCHARGE MACHINING**

(57) The invention discloses a new current feeder unit for a wire electrical discharge machine, in which a traveling wire electrode slides over a current feeder body (20), where the machining current is fed to said wire electrode. The current feeder unit comprises a current feeder body (20) and at least one, preferably two current feeder holders (30, 40), which are coupled with each other by means of by means of a tapered interface fit (51, 52).

Figure 5

**Description**

Field of the Invention

The invention relates to a new current feeder unit and the parts thereof, and to a new wire guiding head for wire cutting machines.

Background of the Invention

Wire cutting machines according to the present invention include all types of wire electrical cutting machines, which cut by means of discrete spark discharges, or by means of electrochemical dissolution or by a combination of both, in particular: wire electrical discharge cutting machines (WEDM), wire electrochemical cutting machines (WECM), wire electrochemical-discharge cutting machines (WECDM), Fast-wire machines (a.k.a. High-speed cutting machines, WEDM-HS, reciprocating wire cutting machines).

The invention is described in connection with wire electrical discharge machines (WEDM), however this is not to be intended as a limitation. WEDM use a traveling wire electrode as a tool to cut a desired contour into a work piece with high accuracy. The work piece is cut by an electrical discharge process, in which electrical discharges occur between the wire electrode and the conductive work piece. This process wears the wire, which is thus continuously renewed. The new wire electrode is stored on a wire spool and travels under mechanical tension through a wire circuit of the WEDM. In the machining area the wire electrode is precisely guided by means of an upper and a lower wire guiding head, each wire guiding head comprising several wire guides, a flushing nozzle and a current feeder. The current feeders transmit the machining current to the wire electrode.

The current feeders used in customary WEDM are stationary with respect to the wire guiding head, so that the traveling wire slides over the electric contact. Typically, the current feeder is made of a hard material such as tungsten or tungsten carbide, and it has a cylindrical or oval cross-section, or a polygonal cross-section with rounded surfaces and/or rounded edges. Typically, the axis of the current feeder is perpendicular to the traveling wire, but other current feeder arrangements are known.

Customary current feeder can be axially displaced and/or rotated, such as to expose a new unworn area of the current feeder surface. For instance, a prism shaped current feeder having four sides, and being axially displaceable 8 times, may thus be used at 32 different positions. The overall lifetime of the feeder is thus considerable, but due to wearing, the current feeder must be repositioned frequently.

For example, considering an upper wire guiding head, a first pre-guide is mounted ahead of the current feeder in the wire traveling direction, and a second pre-guide is mounted shortly after the current feeder. These pre-guides are mounted such that in operation the wire electrode is forced against the current feeder due to the wire tension. Sometimes the second pre-guide is omitted; here the main wire guide serves also to ensure the contact of the wire with the current feeder. The stationary current feeders are subject to mechanical friction by the traveling wire, which continuously slides over the feeders. The new wire electrode passes mainly vertically through the upper wire guide head where some wear occur on the current feeder due to electrical discharges, and due to friction and the micro-asperities present on the wire surface. The lower current feeder, which lies below the machining area is more prone to wear, because the wire surface is covered with craters, and hard work piece particles which are removed by the WEDM process may be transferred to the traveling wire, so that the wire becomes abrasive.

During the WEDM process, the electrical discharges are supposed to occur between the wire and the work piece, but undesired discharges due to unstable contact may occur at the interface area of wire and current feeder. After traveling in front of the work piece in raw cutting, the wire is laced with craters, roughened by the WEDM process, and becomes abrasive. The lower current feeder may thus be subject to a combined erosive and abrasive action. Further, the energy is transferred over a thin line contact area, so that Joule-heating is concentrated in that contact area.

In order to keep the wire cutting machine operational the operator has to reposition the current feeder regularly, and replace it once all positions of the feeder have been used. Depending on the machining conditions and settings, the repositioning of the current feeder is required after 20 to 80 hours. The current feeders are inspected by the operator, typically at predefined maintenance intervals, for instance twice a week. If wearing signs are visible then the current feeders are repositioned by the operator.

It is requested to achieve a high operational reliability of the current feeder and related parts at reasonable cost. It is also desirable to render the inspection, the repositioning and/or the replacement operation of the current feeder possibly quick and easy.

Summary of the Invention

A first aspect of the present invention is directed to a current feeder unit for a wire cutting machine, where said current feeder unit comprises a current feeder body and at least one, preferably two current feeder holders, which are coupled to said feeder body, the current feeder unit having a longitudinal axis which is essentially perpendicular with respect to a wire electrode which slides over the current feeder body, wherein the current feeder body and the at least one current feeder holder are coupled by means of a tapered interface fit on the longitudinal axis of the current feeder body and the at least one, preferably two current feeder holders.

Another aspect of the present invention is directed to a current feeder unit comprising a current feeder body having an outer diameter tapered section converging towards the periphery, at one or both longitudinal sides.

In one variant, the current feeder body comprises a current feeder middle section, and a tapered section converging towards the periphery, at one or both longitudinal sides.

In a further variant, the current feeder body comprises a middle section, having a circular- or polygonal- or rounded polygonal cross-section.

Another aspect of the present invention is directed to a current feeder unit comprising a current feeder holder having an inner diameter tapered seat for coupling with the current feeder body.

In one variant, the holder shell of the current feeder holder is at least partially cylindrical.

In one embodiment, a tapered interface fit which is formed by coupling of the tapered section of the current feeder body and the tapered seat of the current feeder holder is self-locking.

In a preferred variant, the current feeder unit has a symmetrical design.

Still another aspect of the present invention is directed to a current feeder unit comprising a current feeder holder having a plurality of arrester indentations for the longitudinal and/or angular arresting of the current feeder unit.

In one embodiment, the arrester means provided at the holder shell of the current feeder holder includes one or more of: arrester indentations distributed in rows around the holder shell; an at least partially polygonal cross-section; and longitudinal arrester grooves along the holder shell; and circumferential arrester grooves around the holder shell.

In a variant, a first current feeder holder (30) has translational arrester groves along the holder shell to block the translation of the current feeder unit, and a second current feeder holder (40) has rotational arrester grooves around the holder to block the rotation of the current feeder unit.

In a further variant, the current feeder holder comprises at least one releasing aid to ease the release of the tapered interface fit, the releasing aid including one or more of: a co-axial longitudinal bore; a co-axial longitudinal threaded section; and a transversal groove or bore, perpendicular to the longitudinal axis.

In a preferred variant, an angular indexing element is provided at the tapered interface fit of current feeder body and current feeder holder.

Still another aspect of the present invention is directed to **a** wire cutting machine comprising an upper- and a lower wire guiding head, each wire guiding head comprising an insulating seat for lead through of the current feeder unit and a current feeder unit, each wire guiding head further comprising at least one cable junction contact which is in contact with the current feeder holder of the current feeder unit.

Further aspects are set forth in the dependent claims, the following description and the drawings. Other features are inherent in the methods and products disclosed or will become apparent to those skilled in the art from the following detailed description of embodiments and accompanying drawings.

Brief Description of the Drawings

Some preferred embodiments of the invention will now be described, by way of example, and with reference to the accompanying drawings. The drawings illustrate:

FIG. 1,4     a current feeder unit according to the invention;
FIG. 2,5     an exploded view current feeder unit according to the invention;
FIG. 3,6     a sectional view of a current feeder unit according to the invention;
FIG. 7     a current feeder body according to the invention;
FIG. 8-10     a current feeder holder according to the invention;
FIG. 11     a longitudinal sectional view of a current feeder unit according to the invention;
FIG. 12     Cross-section variants of a current feeder body according to the invention;
FIG. 13     is an excerpt of a longitudinal sectional view of a lower wire guiding head according to the invention;
FIG. 14     is an excerpt of a longitudinal sectional view of an upper wire guiding head according to the invention;
FIG. 15     is a spatial view of a form spring clip;
FIG. 16     is a front view of a wire cutting machine.

Description of the Preferred Embodiments

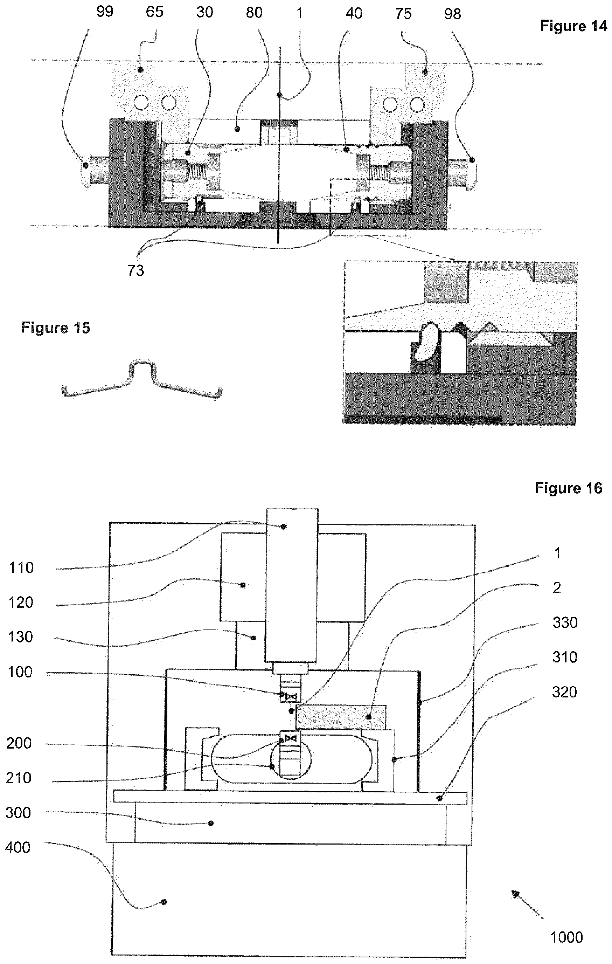

FIG. 16 is a simplified illustration of an exemplary wire cutting machine 1000. This exemplary wire cutting machine has a wire electrode 1 which is guided by wire guides mounted respectively in an upper wire guiding head 100 and a lower wire guiding head 200. The upper wire guiding head 100 is mounted on a Z-axis 110, which is mounted on a U/V axis-pair 120. The U/V axis-pair rests on a column 130, which in turn is mounted on a machine base 400. The lower wire guiding head 200 is mounted on a wire guiding arm 210, which is mounted at column 130, which in turn is mounted on a machine base 400. The work piece 2 is mounted on a mounting system 310, which is mounted on table 320. The table is mounted on a X/Y axis pair 300, which in turn is mounted on the machine base 400. Numeral 330 is a work tank.

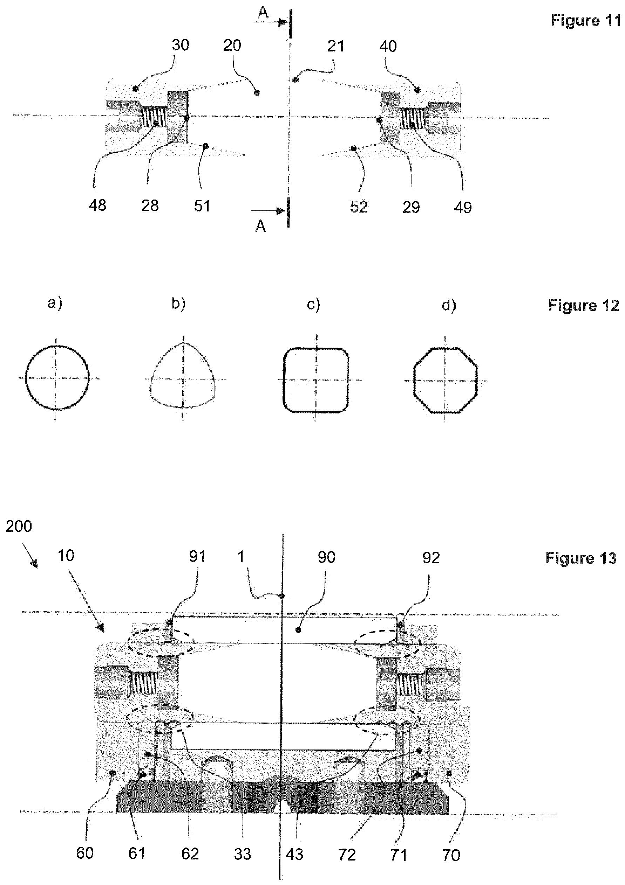

The wire guiding heads 100, 200 each comprise, amongst others, a current feeder unit 10, by which the machining current is transmitted to the wire electrode 1. FIG. 13 shows an excerpt of a longitudinal sectional view of an exemplary lower wire guiding head 200 comprising a current feeder unit 10.

In a preferred embodiment, a current feeder unit for a wire cutting machine according the invention comprises a current feeder body and at least one, preferably two current feeder holders, which are coupled to said current feeder body, the current feeder unit having a longitudinal axis which is essentially perpendicular with respect to a wire electrode which slides over the current feeder body, wherein the current feeder body and the at least one, preferably two current feeder holders are coupled by means of a tapered interface fit on the longitudinal axis of the current feeder body and the at least one, preferably two current feeder holders.

According to an embodiment, the current feeder body comprises a current feeder middle section, and a tapered section converging towards the periphery, at one or both longitudinal sides.

According to a further embodiment, the current feeder holder comprises a tapered seat for coupling with the tapered section of the current feeder body.

According to an embodiment, a tapered interface fit formed by coupling of the tapered section of the current feeder body and the tapered seat of the current feeder holder is self-locking.

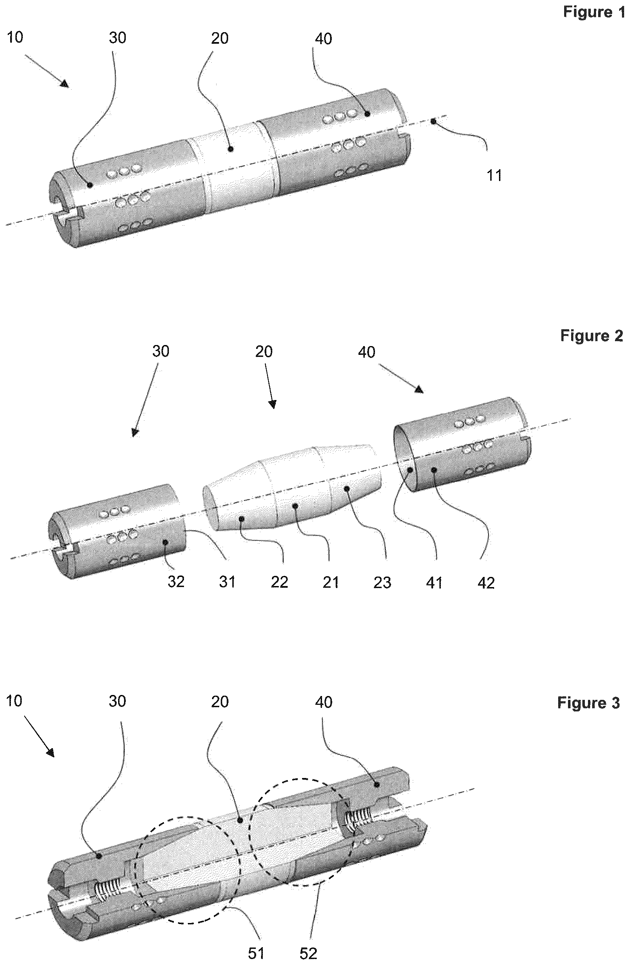

FIG. 1 shows an assembled current feeder unit 10 for a wire cutting machine 1000, according to an embodiment of the invention.

FIG. 2 shows the separated components of the current feeder unit 10 illustrated in FIG. 1, that is, a current feeder body 20 and two current feeder holders 30, 40. When assembled, the current feeder body 20 and current feeder holders 30, 40 have a common longitudinal axis 11.

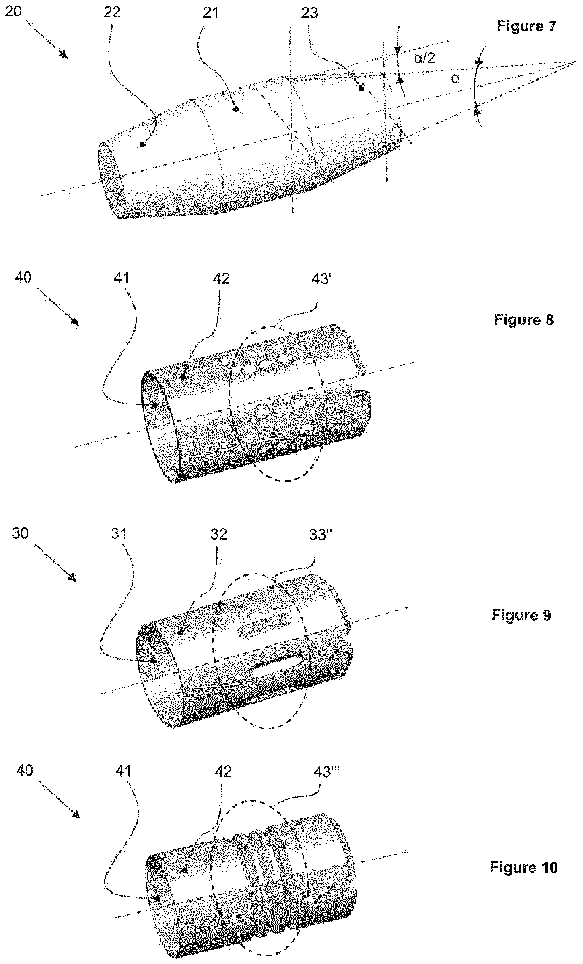

FIG. 7 shows an embodiment of the current feeder body 20. The current feeder body comprises a middle section 21 and side sections 22, 23. In operation, the wire slides over the middle section 21 of the current feeder body 20. The side sections comprise an outer diameter tapered section, which converges from the middle section 21 to the periphery.

FIG. 8 shows an embodiment of the current feeder holder 30, 40. The current feeder holder comprises a holder shell 42, and an internal tapered seat 41. This exemplary current feeder holder comprises a number of arrester means 43' around the holder shell 42.

FIG. 3 is a sectional view of the current feeder unit 10 illustrated in FIG. 1. The current feeder unit comprises tapered interface fits 51, 52 by which the current feeder unit components are joined, and which serves to transmit the machining current from the current feeder holder to the current feeder body. In particular, current feeder body 20 and current feeder holders 30, 40 are coupled by means of a tapered section 22, 23 along the longitudinal axis of the current feeder body 20 and corresponding tapered seat 31, 41 at the current feeder holder 30, 40. The outer diameter tapered section 22, 23 of the current feeder body 20 fits into the internal diameter taper seat 31, 41 of the current feeder holders 30, 40, which have a matching taper of equal angle.

According to a reference - Adrian Creitaru et al. "Tribological Considerations Regarding the Functional Domain Determination of the Conical Fit Assembly", Machine Design, Volume 3, Number 3, pp. 199-204, 2011 - self-locking of the tapered coupling, i.e. wedging together without additional means is achieved by providing a shallow included taper angle $\alpha \leq 2\varphi$, where $\varphi$ is the sliding angle.

Since static friction coefficient is $\mu = \tan \varphi$, the sliding angle $\varphi = \arctan \mu$, so that Self-locking is achieved with:

$$\alpha \leq 2 \ (\text{arctan} \ \mu) \qquad\qquad (1)$$

According to a reference - American Institute of Physics Handbook, section 2d "Coefficients of Friction", by Dudley D. Fuller, Columbia University, 1957 - coefficient of static friction for a combination of a tungsten carbide current feeder body with a stainless steel current feeder holder is in the range of $\mu = 0.08$ (lubricated) to 0.5 (dry). These values are consistent with frictional coefficients indicate by another source: www.engineeringtoolbox.com/friction-coefficients-d_778.html

Using the formula (1) above, with the lowest coefficient of static friction $\mu = 0.08$ and ignoring a safety coefficient, Self-locking is achieved safely for $\alpha \leq 9.1°$.

In practice the coefficient of static friction is much higher so that the included taper angle $\alpha$ is typically made 22°. The minimum coefficient of static friction is for an angle $\alpha$ is

$$\mu \geq \tan(\alpha/2) \qquad (2)$$

With $\alpha = 22°$ the coefficient of static friction for self-locking must be $\geq 0.2$.

Thanks to the self-centering and self-locking, the current feeder unit is quickly assembled and locked without additional means.

According to an embodiment, the current feeder unit has **a** symmetrical design. Preferably, the current feeder body 20 has a symmetrical design. Preferably, the current feeder holders 30 and 40 are similar or identical. In this way the current feeder body 20 and the current feeder holders 30, 40 are quickly assembled with no need to observe the mounting direction of the current feeder body 20. Having identical or at least partially identical current feeder holders contributes to reduce their manufacturing cost.

In certain embodiments, the current feeder unit 10 further comprises a seal at the taper interface fit, for instance one or more O-rings.

FIG. 11 is a longitudinal sectional view of a current feeder unit according to the invention. In this embodiment, the current feeder holders 30, 40 comprise an internal threaded section 48, 49, which serve to release the tapered interface fits 51, 52.

According to an embodiment, the current feeder body 20 comprises a middle section 21, having a circular-, or polygonal-, or rounded polygonal cross-section. Certain preferred embodiments of the cross-section A-A of the middle section 21 of the current feeder body 20 are illustrated in FIG. 12 a)-d).

According to an embodiment, the holder shell 32, 42 of the current feeder holder 30, 40 is at least partially cylindrical. As illustrated in the cross-section FIG. 13, the essentially cylindrical shape of the holder shell 42 of current feeder holder 40 permits the translation and rotation (with little play) about the longitudinal axis 11 of the current feeder unit 10 within an insulating seat 90. The cable junction contacts 60, 70 provided at both sides of the wire guiding heads 100, 200 have a cylindrical seat to fit with the current feeder holders. The current feeder holder has a chamfer or a rounded edge at its external side, which serves to ease insertion of the current feeder unit 10 into the cylindrical seat of the cable junction contact 60, 70.

According to an embodiment, the holder shell 32, 42 comprises a plurality of arrester means 33, 43 for the translational and/or rotational indexing.

FIG. 8, 9 and 10 show the current feeder holder 30 and 40 having a holder shell 42 of essentially cylindrical shape. The current feeder holder 30 and 40 comprises arrester means 33, 43 at the holder shell 32, 42. These arrester means cooperate with a snapping element and serve to arrest the current feeder unit at a desired longitudinal and/or angular position within the wire guiding head 100, 200.

According to an embodiment, the arrester means provided at the holder shell of the current feeder holder includes one or more of:

- arrester indentations (33', not shown), 43' distributed in rows around the holder shell (FIG. 8),
- an at least partially polygonal cross-section (not shown),
- longitudinal arrester grooves 33" along the holder shell (FIG. 9),
- circumferential arrester grooves 43'" around the holder shell (FIG. 10).

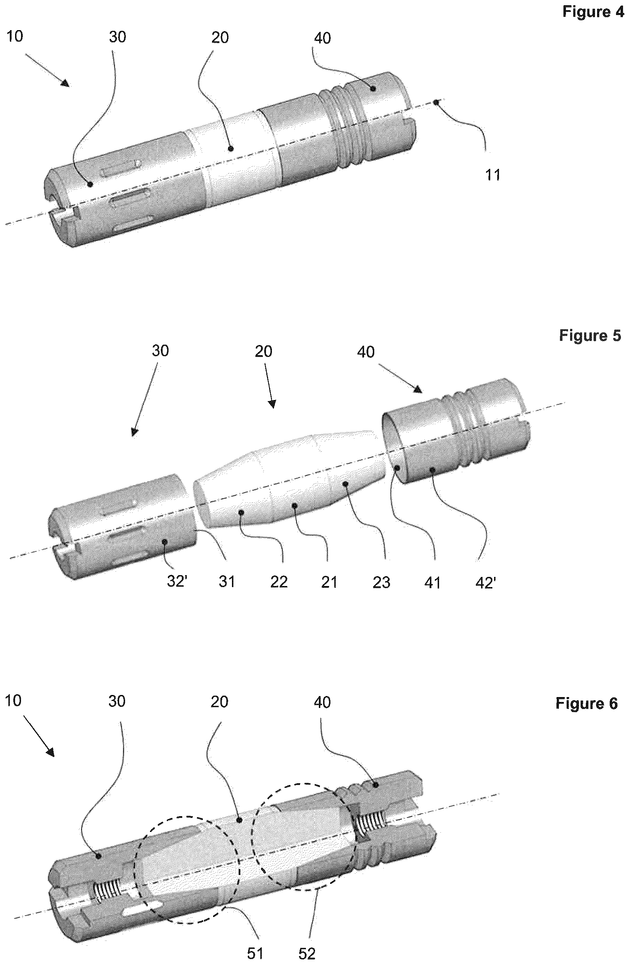

According to the embodiment illustrated in FIG. 4, 5 and 6, the current feeder unit comprises a first current feeder holder 30 having translational arrester grooves along the holder shell to block the translation of the current feeder unit, and a second current feeder holder 40 having rotational arrester groves around the holder shell to block the rotation of the current feeder unit.

Thus, in this embodiment different arrester means are provided at the two holder shells, where each different arrester means blocks one degree of freedom (dof). The translational arrester means serve to block the translation of the current feeder unit and the rotational arrester means serve to block its rotation. The other degrees of freedom are blocked by the part geometry.

Preferably, the translational arrester means are longitudinally spaced circumferential grooves 43'" along the holder shell of the first current feeder holder 40. Preferably, the rotational arrester means are circumferentially spaced longitudinal grooves 33" around the holder shell of the second current feeder holder 30.

For instance, the first current feeder holder 30 has 8 circumferential grooves 43'" longitudinally spaced along the holder shell at a distance of 0.9 mm, and the second current feeder holder (40', not shown) has 6 longitudinal grooves 33" circumferentially distributed around the holder shell of at an angle of 60° from each other. Here the current feeder unit 10 can be positioned at 8 longitudinal positions, and 6 angular positions, means in total 48 contacting positions.

Separating the translational and rotational arrester means as illustrated here above has the advantage that the angular position of the current feeder holders and current feeder body do not need to be aligned, so that the assembly is quick and easy. Moreover, the snapping element always strikes the circumferential grooves by pushing the current feeder unit longitudinally, and it always strikes the longitudinal grooves by rotating the current feeder unit. The distinct arrester means are easily perceived by the operator's haptic during the manual repositioning operation, so that ease of use and reliability of the mechanism is enhanced.

The snapping element engages with the arrester means at the current feeder holders 30, 40 to stop the current feeder unit at the desired translational and rotational position. It exerts a moderate force against the current feeder holders, so that the engagement of one or more snapping elements with one or more corresponding arrester means is perceived by the user's sense of touch at the repositioning or replacement of the current feeder unit 10. By this constitution, the current feeder unit 10 is quickly and easily repositioned manually by firm pressure or rotation.

The snapping element is, for instance, a spring-loaded plunger 62, 72, as shown in Fig. 13, or a form spring clip 73, as shown in Fig. 14. FIG. 14 shows a partial cross section of the upper wire guiding head. The current feeder unit 10 is mounted into an insulating seat 80 and is contacted by means of cable junction contacts 65, 75 which are designed to exert a moderate elastic force on the current feeder holders. The form spring clip 73 illustrated in Fig. 15 is a steel wire which is bended such as to press against the current feeder holder. The terminal part of the form spring clip 73 is visible in FIG.14 (see enlarged rectangle). The form spring clip 73 engages into the longitudinal groove of the current feeder holder 30 and into the circumferential groove of the current feeder holder 40.

The current feeder unit 10 has to be repositioned periodically because of the wearing of the current feeder body 20, anf it is replaced once all positions of the current feeder body are worn. Preferably, the current feeder unit 10 is manipulated, i.e. rotated, translated, indexed, mounted, removed, etc., by means of a suitable tool.

In an embodiment, to ease manipulation, the wire guiding head may comprise knobs 98, 99 for the quick translation and/or rotation of the current feeder unit 10.

According to an embodiment, the current feeder holder 30, 40 comprises at least one releasing aid to ease the release of the tapered interface fit, the releasing aid including one or more of:

- a co-axial longitudinal bore,
- a co-axial longitudinal threaded section 48,49,
- a transversal groove or bore, perpendicular to the longitudinal axis.

As illustrated in detail above, the current feeder unit 10 comprises a current feeder body 20 and current feeder holders 30, 40. The current feeder body 20 must be replaced at the latest when all contacting positions at the middle section of current feeder body are worn. However, the current feeder holders 30, 40 do not need to be replaced such frequently, and can used many times with a new current feeder body. Disassembly of a current feeder unit 10 is now illustrated with reference to FIG. 6. To disassemble this exemplary current feeder unit 10, a screw (not shown) is inserted into the threads 48, 49. The screw presses against the side face 28, 29 of the current feeder body 20 so that the tapered interface fit 51, 52 is unlocked.

An alternative releasing aid comprises a simple co-axial longitudinal bore through the current feeder holders 30, 40. Here the current feeder body 20 released by clamping the current feeder holder, inserting a peg into the bore and pressing against the current feeder body 20.

According to an embodiment, an angular indexing element (not shown) is provided at the tapered interface fit of current feeder body and current feeder holder.

The angular indexing element serves to align the current feeder body 20 and current feeder holders 30, 40 at a desired angular position with respect to each other. This is advantageous with current feeder bodies 20 having a non-cylindrical cross-sections of the middle section 21. In operation, the wire electrode 1 must be parallel to the actual side of the middle section of a polygonal current feeder body 20. The arresting means at the holder shell 42 of the current feeder holder must be located accordingly to permit the precise indexing of the current feeder unit 10.

Materials suitable for the current feeder body 20 include tungsten, tungsten carbide, titan carbide, copper tungsten, etc. Most of these materials are very hard, and comparably expensive. By the simple constitution of the current feeder unit 10, in particular the simple geometry, the current feeder body 20 is easily manufactured. Preferably, the surface of the middle sections 21 and side sections 22, 23 is produced by grinding.

Materials suitable for the current feeder holders 30, 40 include stainless steel and wolfram. In some embodiments the current feeder holder 30, 40 comprises a coating.

According to an embodiment of the invention, a wire cutting machine 1000 comprises an upper- and a lower wire guiding head 100, 200, each wire guiding head comprising a insulating seat 80, 90 for lead through of the current feeder unit 10, each wire guiding head further comprising at least one cable junction contact 60, 70 which is in contact with with the current feeder holder of the current feeder unit 10.

The following is to illustrate the section of the wire guiding head dedicated to the feeding of the machining current to the wire electrode, with reference to the sectional view in FIG. 14. The wire guiding head 100, 200 comprises an electrically insulating seat 80, 90, for instance a ceramic or plastic part, in which the current feeder unit 10 is inserted with slight play. The insulating seat 80, 90 has an opening at the center, so that the wire electrode 1 can slide over the current feeder unit 10, unhindered. The cable junction contacts 65, 75 are mounted at both sides of the wire guiding head. The cable junction contacts 65, 75 comprise a cylindrical seat to contact the current feeder unit 10. The cylindrical seat of the cable junction contacts 65, 75, which contacts the current feeder unit 10 exerts an elastic force at the current feeder holders 30, 40. The current feeder unit 10 is inserted into the cylindrical seat of the cable junction contact and freely traverses the insulating seat 80.

The following is to illustrate the path of the machining current to the wire electrode 1, using FIG. 14 as an example: The current cables (not shown) carrying the machining current are connected at the cable junction contacts 65, 75 by means of screws. The cable junction contacts 65, 75 are located at the left and right of the wire guiding head 100. The current feeder unit 10 is held in place by the cylindrical seat at the cable junction contact 65, 75 as described above.

The current is carried from a generator to the cable junction contacts 65, 75. Then the current is transmitted through the interface of the cylindrical seat at the cable junction contact 65, 75 to the holder shell 32, 42 of the current feeder holders 30, 40. Next, the current is transmitted from the current feeder holders 30, 40 to the current feeder body 20 at the tapered interface fit 51, 52. Lastly, the current is transmitted from the current feeder body 20 to the wire electrode 1, which slides over the middle section 21 of the current feeder body 20.

As illustrated, the geometry of the current feeder body 20 is comparably simple, which is an important aspect for wearing parts. Moreover, the current feeder unit according the invention has numerous advantages:

- short and reliable current path between cable junction contact current feeder body;
- quick and easy assembly and disassembly of current feeder unit components thanks to the self-centering properties;
- quick and easy manual repositioning and replacement, without special tools;
- possibility of an automatic repositioning and replacement by means of a robot or other automation means;
- limited cost of the current feeder body; reduced hourly machine cost.

Moreover, the most suitable material can be used for each specific part, for example:

- the cable junction contact which carries the current to the current feeder holder may be of made bronze, which is advantageous due the electrical properties and suitable elastic properties;
- the current feeder holder may be made of stainless steel, which is advantageous due to corrosion resistance and electrical properties;
- the current feeder body may be made of pure tungsten, which is advantageous due to wear resistance and electrical properties.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Reference numbers

[0055]

| 1 | Wire electrode |
| 2 | Work piece |
| 10 | Current feeder unit |
| 11 | Axis of current feeder unit |
| 20 | Current feeder body |
| 21 | Middle section of current feeder body |
| 22,23 | Side section of current feeder body |
| 28,29 | Side face of current feeder body |
| 30,40 | Current feeder holder |
| 31,41 | Taper seat |
| 32,42 | Holder shell |
| 33,43 | Arrester means |
| 43' | Arrester indentations |
| 43" | longitudinal arrester grooves |
| 43''' | circumferential arrester grooves |
| 48,49 | Internal threaded section |
| 51,52 | Tapered interface fit (TIF) |

| 60,70 | Cable junction contact, lower head |
| 65,75 | Cable junction contact, upper head |
| 61,71 | Thread |
| 62,72 | Spring-loaded plunger |
| 73 | Form-spring |
| 80,90 | Insulating seat for the current feeder unit |
| 91,92 | Insulating spacer |
| 98 | Right knob for translation |
| 99 | Left knob for rotation |
| $\alpha$ | Taper angle of current feeder body |
| 1000 | Wire cutting machine |
| 100,200 | Upper/lower wire guiding head |
| 110 | Z-axis |
| 120 | U/V axis pair |
| 130 | Column |
| 210 | Wire guiding arm |
| 300 | X/Y axis pair |
| 310 | Mounting system |
| 320 | Table |
| 400 | Machine base |

**Claims**

1. Current feeder unit for a wire cutting machine, **characterized in that** the current feeder unit comprises a current feeder body and at least one, preferably two current feeder holders, which are coupled to said current feeder body, the current feeder unit having a longitudinal axis which is essentially perpendicular with respect to a wire electrode which slides over the current feeder body, wherein the current feeder body and the at least one, preferably two current feeder holders are coupled by means of a tapered interface fit on the longitudinal axis of the current feeder body and the at least one, preferably two current feeder holders.

2. Current feeder unit according to claim 1, **characterized in that** the current feeder body comprises a current feeder middle section, and a tapered section converging towards the periphery, at one or both longitudinal sides.

3. Current feeder unit according to claim 1 or 2, **characterized in that** the current feeder holder comprises a tapered seat for coupling with the tapered section of the current feeder body.

4. Current feeder unit according to one of the preceding claims, **characterized in that** a tapered interface fit formed by coupling of the tapered section of the current feeder body and the tapered seat of the current feeder holder is self-locking.

5. Current feeder unit according to one of the preceding claims, **characterized in that** the current feeder unit has a symmetrical design.

6. Current feeder unit according to one of the preceding claims, **characterized in that** the current feeder body comprises a middle section, having a circular- or polygonal- or rounded polygonal cross-section.

7. Current feeder unit according to one of the preceding claims, **characterized in that** the holder shell of the current feeder holder is at least partially cylindrical.

8. Current feeder unit according to one of the preceding claims, **characterized in that** the holder shell comprises a plurality of arrester means for the translational and/or rotational indexing.

9. Current feeder unit according to claim 8, **characterized in that** the arrester means provided at the holder shell of the current feeder holder includes one or more of:

   - arrester indentations distributed in rows around the holder shell,
   - an at least partially polygonal cross-section,

- longitudinal arrester grooves along the holder shell,
- circumferential arrester grooves around the holder shell.

10. Current feeder unit according to one of the preceding claims, **characterized in that** a first current feeder holder (30) has translational arrester groves along the holder shell to block the translation of the current feeder unit, and a second current feeder holder (40) having rotational arrester grooves around the holder to block the rotation of the current feeder unit.

11. Current feeder unit according to one of the preceding claims, **characterized in that** the current feeder holder comprises at least one releasing aid to ease the release of the tapered interface fit, the releasing aid including one or more of:

- a co-axial longitudinal bore,
- a co-axial longitudinal threaded section,
- a transversal groove or bore, perpendicular to the longitudinal axis.

12. Current feeder unit according to one of the preceding claims, **characterized in that** an angular indexing element is provided at the tapered interface fit of current feeder body and current feeder holder.

13. Wire cutting machine comprising an upper- and a lower wire guiding head, each wire guiding head comprising an insulating seat for lead through of the current feeder unit, each wire guiding head further comprising at least one cable junction contact which is in contact with the current feeder holder of the current feeder unit.

**Figure 1**

**Figure 2**

**Figure 3**

Figure 4

Figure 5

Figure 6

**Figure 7**

**Figure 8**

**Figure 9**

**Figure 10**

**Figure 11**

**Figure 12**

a)      b)      c)      d)

**Figure 13**

**Figure 14**

99    65    30    80    1    40    75    98

73

**Figure 15**

**Figure 16**

110
120
130
100

200
210
300
400

1
2
330
310
320

1000

Europäisches
Patentamt

European
Patent Office

Office européen
des brevets

# EUROPEAN SEARCH REPORT

Application Number

EP 20 19 8279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 150 626 A (MORO TOSHIO [JP] ET AL) 21 November 2000 (2000-11-21) | 13 | INV. B23H7/10 |
| A | * column 9, lines 61-62 * * column 10, lines 47-51 * ----- | 1 | |
| A | JP S59 128327 U (UNKNOWN) 29 August 1984 (1984-08-29) * figures * ----- | 1-12 | |
| A | US 5 384 444 A (TRUTY THOMAS J [US] ET AL) 24 January 1995 (1995-01-24) * figure 1 * * figure 3 * ----- | 1,8,9 | |

TECHNICAL FIELDS
SEARCHED        (IPC)

B23H

The present search report has been drawn up for all claims

| Place of search | Date of completion of the search | Examiner |
|---|---|---|
| The Hague | 17 March 2021 | Jaeger, Hein |

## ANNEX TO THE EUROPEAN SEARCH REPORT
## ON EUROPEAN PATENT APPLICATION NO.

EP 20 19 8279

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2021

| Patent document cited in search report | | Publication date | Patent family member(s) | | Publication date |
|---|---|---|---|---|---|
| US 6150626 | A | 21-11-2000 | CH | 694118 A5 | 30-07-2004 |
| | | | CH | 694551 A5 | 31-03-2005 |
| | | | JP | 3731786 B2 | 05-01-2006 |
| | | | JP | H11235623 A | 31-08-1999 |
| | | | TW | 389713 B | 11-05-2000 |
| | | | US | 6150626 A | 21-11-2000 |
| JP S59128327 | U | 29-08-1984 | JP | S6236587 Y2 | 17-09-1987 |
| | | | JP | S59128327 U | 29-08-1984 |
| US 5384444 | A | 24-01-1995 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ADRIAN CREITARU et al.** Tribological Considerations Regarding the Functional Domain Determination of the Conical Fit Assembly. *Machine Design,* 2011, vol. 3 (3), 199-204

- Coefficients of Friction. **DUDLEY D. FULLER.** American Institute of Physics Handbook. Columbia University, 1957